# EUROPEAN PATENT SPECIFICATION

(11) **EP 3 745 089 B1**
(45) Date of publication and mention of the grant of the patent: **02.08.2023**
(21) Application number: 20176993.2
(22) Date of filing: 28.05.2020
(51) Int. Cl.: G01C 21/34, G07B 15/06

(54) **APPARATUS AND METHOD FOR DETERMINING THE ROAD ROUTE OF A VEHICLE BASED ON DATA INDICATING ITS GEOGRAPHICAL POSITION**
VORRICHTUNG UND VERFAHREN ZUR BESTIMMUNG DER STRASSENROUTE EINES FAHRZEUGS BASIEREND AUF DATEN, DIE SEINE GEOGRAPHISCHE POSITION ANGEBEN
APPAREIL ET PROCÉDÉ PERMETTANT DE DÉTERMINER L'ITINÉRAIRE ROUTIER D'UN VÉHICULE SUR LA BASE DE DONNÉES INDIQUANT SA POSITION GÉOGRAPHIQUE

(30) Priority: 31.05.2019 IT 201900007695
(43) Date of publication of application: 02.12.2020
(73) Proprietor: MOVYON S.p.A., 00159 Roma (IT)
(72) Inventor: ANARDU, Lorenzo, 00159 ROMA (IT); CIVININI, Leonardo, 00159 ROMA (IT); SIRDONE, Nicola, 00159 ROMA (IT)
(74) Representative: Pietra, Giulia

(56) References cited:
- EP-A1- 1 993 076
- US-A1- 2009 307 151
- YIN LOU ET AL: "Map-matching for low-sampling-rate GPS trajectories", PROCEEDINGS OF THE 17TH ACM SIGSPATIAL INTERNATIONAL CONFERENCE ON ADVANCES IN GEOGRAPHIC INFORMATION SYSTEMS, GIS '09, ACM PRESS, NEW YORK, NEW YORK, USA, 4 November 2009 (2009-11-04), pages 352-361, XP058360562, DOI: 10.1145/1653771.1653820 ISBN: 978-1-60558-649-6

## Description

The present invention relates in general to the field of telematic traffic services. In particular, the present invention relates to an apparatus and a method for determining the road route of a vehicle based on data indicating its geographical position, for example (but not exclusively) for the purpose of determining a toll payable by the driver of the vehicle.

As is known, the toll consists of a sum which is due to a (public or private) service provider for travelling along a roadway infrastructure, such as a road or motorway, bridge, tunnel, etc. The toll may be proportional to the distance of the travel route or may be a predefined amount.

Payment of the toll may be performed upon entering or leaving the roadway infrastructure, typically at specially provided barriers or gates using cash, prepaid cards (for example *Viacard*)*,* credit cards or on-board equipment which uses radio technology (typically DSRC, i.e. Dedicated Short-Range Communications).

The toll payment field is increasingly moving towards the use of satellite tolling systems. These systems determine whether the vehicle is travelling along or has travelled along a toll roadway infrastructure based on data relating to its geographical position obtained by means of satellite geolocation systems. Collection of the toll (which is for example proportional to the distance of the travel route in the case of a road or motorway) is thus performed without the need to provide barriers or gates at the entry and exit points of the roadway infrastructure.

A satellite tolling system generally involves the definition of a set of tariff points or "virtual gates" which are distributed along the road or motorway subject to a toll. The system also involves the use of an on-board device or OBU (on-board unit) which is capable of determining the geographical position of the vehicle by communicating with one or more satellite geolocation systems (typically GPS or Glonass).

The on-board device periodically sends (for example via the cellular network or other radio technology, for example DSRC) data indicating its detected geographical position to a central system which performs so-called "map matching", i.e. it considers the road map of the relevant area and determines on it the road route of the vehicle based on the sequence of geographical positions received. Then, on the basis of the road route determined, the central server determines any transits at the virtual gates and therefore any toll due.

Different algorithms for performing map matching are known. Generally, these algorithms operate off-line, since for payment of the toll it is not required to determine the road route of the vehicle in real time. Besides, a high degree of precision is required in order to minimize as far as possible the risk of demanding unfairly the payment of tolls by vehicles which have not actually travelled along the toll road or motorway, but instead, for example, along another road which is close by.

A known algorithm described by https://gssc.esa.int/navipedia/index.php/Tolling involves subdividing the territory crossed by a toll road or motorway into a sequence of polygonal areas (or virtual gantries), each formed by two quadrilaterals joined by one common side and crossed by a respective section of the road or motorway, which crosses the common side and enters and exits the gantry through the two sides opposite to the common side. It is determined that the vehicle has travelled along the road route section which crosses a gantry when, on the basis of the geographical coordinates, it is determined that a vehicle has entered or exited the gantry.

This solution involves a reduced computational load, something which is advantageous considering that the central system typically performs map matching for a very large number of vehicles.

However, the Applicant has noted that this solution has a number of drawbacks.

In particular, in some cases the dimensions of the gantry may be problematic. Assuming that the geographical coordinates are subject to an error with Gaussian distribution, in order to reduce the risk of not detecting the passage of vehicles the width of the gantries must be sufficiently large compared to the standard deviation σ of the error in relation to the geographical coordinates. On the other hand, by increasing the width of the gantries, it is likely that they will interfere with other roads or motorways close to the monitored one. If the roads are very close (for example, but not exclusively, in an urban environment) it may be therefore difficult to tailor the width of the gantries so as to obtain a probability of failed detection which is sufficiently low and, at the same time, avoid interference with other nearby roads or motorways.

US 2009/307151 describes a method for automatically reconstructing the route travelled by a vehicle, where an on-board device of the vehicle detects the sequence of geographical positions of the vehicle and applies a filtering algorithm for selecting the most significant ones. These are then sent to a central device which has access to a digital road map. The central device associates each significant position received with the projection thereof on one or more possible road route sections of the digital road map. The sequence of projections - and therefore the road route section - which most probably corresponds to the sequence of significant positions received is then chosen. The most probable road route sections are then concatenated to reconstruct the overall road route.

The Applicant has noted that this solution also has drawbacks. The determination of the route is indeed based on information relating to the significant positions filtered by the on-board device and not on all the positions acquired. This allows the computational load of the central device to be reduced and results to be provided in real time. However, the results may be inaccurate, and errors may occur, in particular in case the roads are very close to each other. If, moreover, there is an error in the determination of one of the most probable road route sections associated with a certain sequence of significant positions, the attempt to concatenate the various most probable road route sections in order to determine the overall road route may not provide any result.

The object of the present invention is to provide an apparatus and a method for determining the road route of a vehicle based on data indicating its geographical position (i.e. for performing map matching), which solves the aforementioned problems.

In particular, the object of the present invention is to provide an apparatus and a method for determining the road route of a vehicle based on data indicating its geographical position (i.e. for performing map matching), which result in a smaller computational load and which at the same time are reliable, also in the case where the roads are particularly close to each other (5-10 m), as occurs for example in urban environments.

According to embodiments of the present invention, this object is achieved by an apparatus (for example a central server) which receives (typically from an on-board device installed on board the vehicle) data indicating a sequence of geographical positions of the vehicle; from the sequence of geographical positions received, the apparatus selects a set of reference points (referred to below also as "waypoints") where significant events relating to the travel of the vehicle are detected, whereby "significant events relating to the travel of the vehicle" are understood as meaning events which result in changes of the travel state of the vehicle (from standstill to a moving state or vice versa, i.e. stopping and restarting), significant variations in its speed of travel (namely variations in speed greater than a certain threshold, for example 5 km/h), or significant variations in its direction of travel (namely turning, i.e. variations in direction greater than a certain threshold, for example 30°); for each pair of consecutive reference points, the apparatus determines the admissible road route sections allowing to travel from the first reference point of the pair to the second reference point of the pair according to cartographic data indicative of the topology of the road network in the area comprising the sequence of geographical positions received; the apparatus then determines one or more possible road routes between the first and the last of the reference points by concatenating admissible road route sections; finally the apparatus identifies the most probable road route amongst the possible road routes based on values of a parameter indicating the probability that the vehicle actually followed each of the possible road routes. The values of this parameter are calculated by comparing the original sequence of all the geographical positions of the vehicle detected with the possible road routes.

The method performed by the apparatus according to the present invention advantageously results in a smaller computational load and furthermore is advantageously reliable, also in case the roads are particularly close to each other (5-10 m), as occurs for example in urban environments.

The most complex step from a computational point of view is in fact that of determining, for each pair of consecutive reference points, the admissible road route sections according to the topology of the road network. According to the present invention, this step is performed only for pairs of consecutive reference points, and not for all the pairs of consecutive geographical positions received. If, for example, the vehicle is travelling along a motorway section, very few significant events relating to its travel will be detected, because the vehicle for most of the time will be travelling at a substantially constant speed and with few variations in its direction. Therefore, the selected reference points - for which the admissible road route sections will be determined - will be much fewer than the total number of geographical positions received. This advantageously results in a reduction of the computational load required by the apparatus according to the present invention to determine the admissible road route sections.

It should also be noted that determination of the admissible road route sections for the various pairs of consecutive reference points may be performed in parallel, for example by different threads. This advantageously results in reduction of the time for determining the overall road route.

On the other hand, the method performed by the apparatus according to the present invention is also accurate with regard to reconstruction of the road route. In order to determine the reference points, indeed, the apparatus takes into account all the geographical positions received from the on-board device of the vehicle. If these are received with a high frequency (for example every few seconds) the apparatus is therefore advantageously able to detect variations in the state of travel and direction or fast speeds and sudden accelerations. The apparatus may thus generate reference points when these variations occur, so as to take them into account when determining the road route of the vehicle.

Moreover, although the apparatus determines the possible road routes on the basis of the concatenation of the sections which join together only the selected reference points, the selection of the most probably road route amongst the possible ones again takes into account the entire sequence of detected geographical positions of the vehicle, including those which the apparatus did not select as reference points. This advantageously ensures particularly accurate determination of the most probably route.

According to a first aspect, an apparatus for determining the road route of a vehicle is provided, the apparatus being configured to:
a) receive from an on-board device installed on board the vehicle data indicating a sequence of geographical positions through which the vehicle has passed;
b) select from the sequence of geographical positions a set of reference points at which significant events relating to the travel of the vehicle are detected, a significant event relating to the travel of the vehicle comprising at least one of stopping, restarting and turning of the vehicle;
c) for each pair of consecutive reference points, determine one or more admissible road route sections allowing to travel from the first reference point of the pair to the second reference point of the pair according to cartographic data indicating the topology of the road network in an area comprising the sequence of geographical positions;
d) determine one or more possible road routes between the first one of the reference points and the last one of the reference points by concatenating the admissible road route sections; and
e) identify the most probable road route amongst the one or more possible road routes based on values of a parameter indicating the probability that the vehicle actually followed each of the one or more possible road routes, each value of the parameter being calculated by comparing the sequence of geographical positions of the vehicle with one of the possible road routes.

Preferably, the data indicating the sequence of geographical positions comprises, for each geographical position, at least one of:
- geographical coordinates of the geographical position;
- date and time of the geographical position;
- direction and speed of the vehicle at the geographical position;
   and
- information indicating the reliability of the geographical position.

Preferably the apparatus is configured, when selecting the set of reference points, to remove at least one geographical position from the sequence of geographical positions, the at least one geographical position being removed if:
- on the basis of the information indicating the reliability of the geographical position, it is determined that the geographical position is unreliable; and/or
- on the basis of the geographical coordinates of the geographical position, it is determined that the geographical position is redundant in that the distance between the geographical position and the last selected reference point is shorter than a minimum distance allowed between consecutive reference points.

Preferably, the apparatus is configured, when selecting the set of reference points, to select a geographical position of the sequence of geographical positions as a reference point if:
- on the basis of the speed of the vehicle at the geographical position and the speed of the vehicle at the last selected reference point, it is determined that the geographical position corresponds to stopping or to restarting of the vehicle; or
- on the basis of the direction of the vehicle at the geographical position and the direction of the vehicle at the last selected reference point, it is determined that the geographical position corresponds to turning of the vehicle; or
- it is determined that the geographical position has a distance from the last selected reference point greater than a maximum allowed distance between consecutive reference points.

Optionally, the apparatus is configured, when selecting the set of reference points, to select a geographical position of the sequence of geographical positions as a reference point also when this geographical position corresponds to a loss or reacquisition of the geolocation signal by the on-board device.

Preferably, the cartographic data comprises a road graph representing the topology of the road network.

Preferably, the apparatus is configured to, when determining the one or more admissible road route sections:
- for each selected reference point, identify at least one edge of the road graph that falls at least partially within a search area defined around the reference point; and
- for each pair of edges that fall at least partially within search areas defined around consecutive reference points, determine at least one admissible road route section as a concatenation of edges of the road graph joining the pair of edges.

Preferably the apparatus is also configured, when determining the one or more admissible road route sections, for each pair of consecutive reference points, to perform a filtering of any admissible but unlikely road route sections, the filtering being based on one or more metrics calculated for each admissible road route section between the pair of consecutive reference points, the one or more metrics comprising:
- at least one metric indicating a distance or similarity between a curve passing through the geographic positions comprised between the pair of consecutive reference points and the admissible road route section between the pair of consecutive reference points; and/or
- at least one metric indicating the difference between a nominal travel time of the admissible road route section between the pair of consecutive reference points and an actual travel time between the pair of consecutive reference points.

Preferably, the apparatus is configured, when determining the one or more possible road routes, to perform an iterative process comprising:
d1) determining any concatenation of admissible road route sections joining the first reference point and the (j+1)-th reference point, j being equal to 1 at the first iteration of the step d1) and increasing by 1 at each subsequent iteration of the step d1);
d2) if at the j-th iteration of step d1) at least one concatenation of admissible road route sections joining the first reference point and the (j+1)-th reference point is determined, performing a new iteration of step d1 );
d3) if at the j-th iteration of step d1) no concatenation is determined:
   - re-determining admissible road route sections starting from the pair of consecutive j-th and (j+1)-th reference points backwards up to a maximum of k pairs of consecutive (j-k+1)-th and (j-k+2)-th reference points and determining any concatenations of admissible road route sections joining the first reference point and the (j+1)-th reference point by using the re-determined admissible road route sections;
   - if at least one concatenation is determined, performing a new iteration of step d1);
   - if no concatenation is determined, concluding that there is an interruption in the road route between the pair of consecutive j-th and (j+1)-th reference points and performing a new iteration of step d1) to determine at least one concatenation of admissible road route sections joining the (j+ 1)-th reference point and the last reference point.

Preferably the apparatus is configured to, when identify said most probable road route, calculating the parameter, for each possible road route:
- on the basis of a distance or similarity between a curve passing through the sequence of geographical positions and the possible road route; and/or
- on the basis of the difference between a nominal travel time of the possible road route and an actual travel time of the sequence of geographical positions.

According to a second aspect of the present invention, a method is provided for determining the road route of a vehicle, the method comprising:
- receiving from an on-board device installed on board the vehicle data indicating a sequence of geographical positions through which the vehicle has passed;
- selecting from the sequence of geographical positions a set of reference points at which significant events relating to the travel of the vehicle are detected, a significant event relating to the travel of the vehicle comprising at least one of stopping, restarting and turning of the vehicle;
- for each pair of consecutive reference points, determining one or more admissible road route sections allowing to travel from the first reference point of the pair to the second reference point of the pair according to cartographic data indicating the topology of the road network in an area comprising the sequence of geographical positions;
- determining one or more possible road routes between the first one of the reference points and the last one of the reference points by concatenating the admissible road route sections; and
- identifying the most probable road route amongst the one or more possible road routes based on values of a parameter indicating the probability that the vehicle actually followed each of the one or more possible road routes, each value of the parameter being calculated by comparing the sequence of geographical positions of the vehicle with one of the possible road routes.

According to a third aspect of the present invention, a satellite tolling system comprising the aforementioned apparatus is provided.

According to a fourth aspect, a computer program is provided, said program being loadable in the memory of a computer and comprising software code portions for performing the steps of the aforementioned method, when the program is executed by the computer.

The present invention will become clearer from the following detailed description, provided by way of a non-limiting example, to be read with reference to the accompanying drawings, in which:
- Figure 1 shows in schematic form a system for determining the road route of a vehicle according to an embodiment of the present invention;
- Figure 2 shows a flow chart of the method for determining the road route of a vehicle according to an embodiment of the present invention;
- Figure 3 shows an example of application of the method according to the flow chart of Figure 2;
- Figure 4 shows in greater detail a first step of the flow chart shown in Figure 2, according to an embodiment of the present invention;
- Figures 5a and 5b show in greater detail a second step of the flow chart shown in Figure 2, according to an embodiment of the present invention; and
- Figure 6 shows in greater detail a third step of the flow chart shown in Figure 2, according to an embodiment of the present invention.

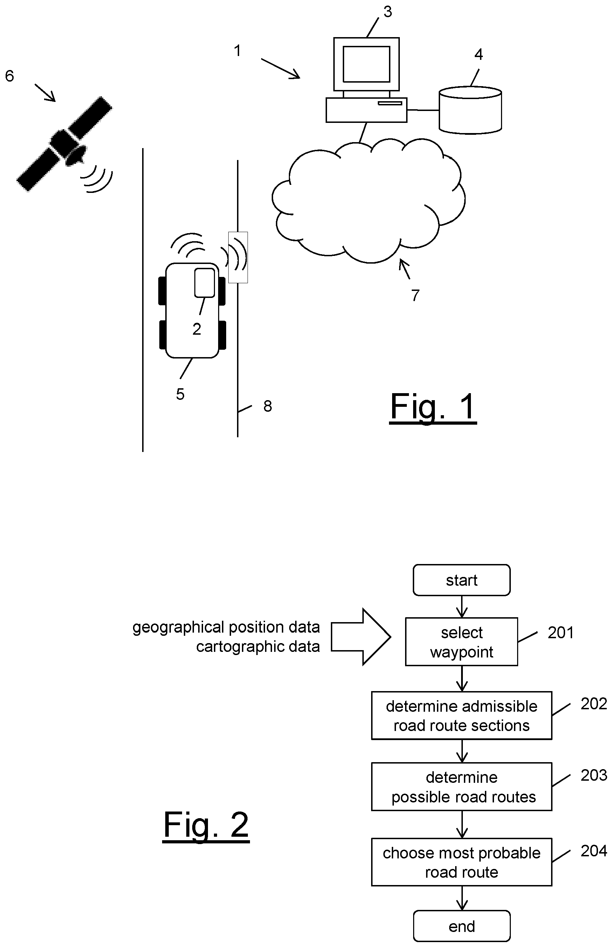

Figure 1 shows in schematic form a system 1 for determining the road route of a vehicle according to an embodiment of the present invention.

The system 1 preferably comprises an on-board device 2, an apparatus (such as a central server) 3 and a database 4 which can be accessed by the apparatus 3.

The on-board device 2 is preferably designed to be installed on board a vehicle 5. The vehicle 5 may be a private vehicle or a public transport vehicle.

The on-board device 2 is preferably configured to communicate with at least one geolocation system 6, such as a GPS (Global Positioning System), Galileo or Glonass system. For this purpose, the on-board device 2 preferably comprises a satellite receiver configured to receive from the geolocation system 6 information from which data indicative of its geographical position - and therefore of the geographical position of the vehicle 5 - can be determined.

The on-board device 2 is preferably configured to communicate with the apparatus 3. For this purpose, the on-board device 2 preferably also comprises a radio communication module configured to transmit to the apparatus 3 - via a communications network 7 - data indicative of the geographical position of the on-board device 2 (and therefore of the vehicle 5).

For example, the radio communication module of the on-board device 2 may comprise a SIM (Subscriber Identity Module) card and a cellular transmitter/receiver capable of communicating with the apparatus 3 by means of a mobile network included in the communication network 7. Alternatively, the radio communication module may comprise a Wi-Fi o LoRa (Long Range) transmitter/receiver capable of communicating with corresponding devices for accessing the communication network 7.

The apparatus 3 may be a central server, implemented as a single computer or via cloud computing technology. In the following of the present description, the apparatus 3 will also be referred to as a "central server". The central server 3 is preferably configured to store in a database 4 the data indicative of the geographical position of the on-board device 2 (and therefore the vehicle 5) received from the on-board device 2 and to apply to it a map matching algorithm for determining the road route of the vehicle 5.

In particular, as shown schematically in Figure 2, the algorithm executed by the central server 3 preferably receives at its input:
- the data indicative of the geographical position of the on-board device 2 (and therefore the vehicle 5) received from the on-board device 2; and
- cartographic data indicative of the topology of the road network in the area concerned.

Preferably, the data indicative of the geographical position of the on-board device 2 is sent to the central server 3 periodically, for example every 3 to 10 seconds (for example every 5 seconds). In this way, the on-board device 2 essentially provides the central server 3 with a sequence of geographical positions of the vehicle 5 while the vehicle is travelling along a certain road route, for example a toll road or motorway 8. The central server 3 preferably stores the data received from the device 2 in the database 4, where it is stored for subsequent processing.

As for the cartographic data, it is also preferably stored in the database 4 and updated or retransmitted only in the event of modifications to the topology of the road network (construction of a new road or a new roundabout, introduction of a one-way system, etc.). Preferably, the cartographic data as stored in the database 4 is unprocessed (or raw) cartographic data. Said data is preferably processed and synthesized in a structure which may be rapidly navigated. This structure may be for example in the form of a road graph representing the topology of the road network in the area of interest, the edges thereof representing the roads and the nodes representing the road intersections. The cartographic data preferably also comprises information such as areas not accessible to traffic or with limited access for certain categories of vehicles, prohibited manoeuvres (for example reversing), etc. Preferably, the road graph is loaded into an internal memory of the central server 3. This advantageously allows the central server 3 to operate in a more efficient manner, reducing the number of times it accesses the database 4.

When processing starts, during a first step 201 the central server 3 preferably selects, from the sequence of geographical positions of the vehicle 5 received from the on-board device 2 and stored in the database 4, a sequence of reference points (or "waypoints") which are crossed by the vehicle 5. The waypoints generally are geographical positions where significant events relating to the travel of the vehicle 5 are detected, such as changes in its travel state (from standstill to a moving state or vice versa), significant variations in its speed, or significant variations in its direction. The criteria for selecting the waypoints will be described in detail hereinbelow.

Then, during a subsequent step 202, using the road graph obtained from the cartographic data stored in the database 4, for each pair of consecutive waypoints, the central server 3 preferably determines one or more admissible road route sections, namely one or more road route sections which, according to the topology of the road network in the area concerned, allow travel from the first waypoint of the pair to the next one.

Then, during a following step 203, the central server 3 preferably determines one or more possible road routes of the vehicle 5 from the first waypoint to the last waypoint of the sequence determined at step 201, by concatenating the admissible road route sections determined at step 202. In order to establish which concatenation(s) (and therefore route(s)) is/are possible, the central server 3 again takes into account the topology of the road network.

Then, during a next step 204, the central server 3 preferably selects amongst the possible road routes determined at step 203 the most probable road route, namely the one which was most likely followed by the vehicle 5. For this purpose, the central server 3 preferably compares the original sequence of geographical positions of the vehicle 5 received from the on-board device 2 with each one of the possible road routes determined at step 203 and, based on this comparison, calculates for each of them a parameter indicating the probability that the vehicle 5 actually followed that possible road route. This parameter may be for example a cost parameter (in which case the value of the parameter is inversely proportional to the probability) or a merit parameter (in which case the value of the parameter is proportional to the probability). The most probable road route is then preferably chosen on the basis of the values of this parameter calculated for the possible road routes (minimum value in the case of the cost parameter and maximum value in the case of the merit parameter).

Once the most probable road route has been identified, the central server 3 will then determine the transits at any virtual gate defined along the route and, therefore, any toll which is due. This step will not be described in further detail, since it does not form part of the present invention.

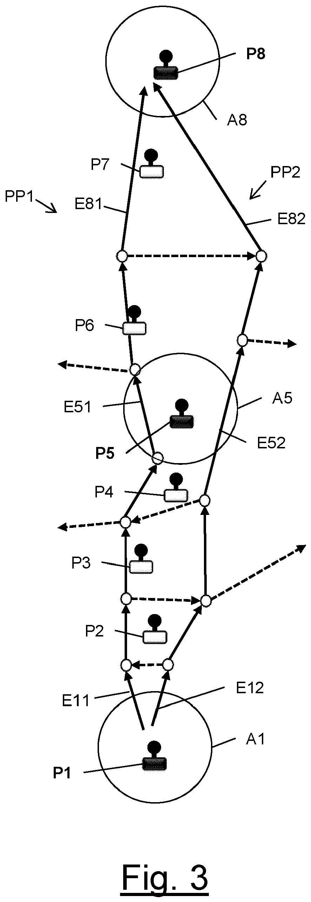

Figure 3 shows an example of application of the algorithm according to Figure 2.

Figure 3 shows a sequence of geographical positions P1, P2, ... P8 of the vehicle 5 which have been detected by the on-board device 2 by means of interaction with the geolocation system 6.

At the first step 201, the central server 3 preferably selects, from the sequence of geographical positions P1, P2, ... P8, a sequence of waypoints. By way of example, it is assumed that the waypoints selected at step 201 are P1, P5 and P8 (shown in bold in Figure 3).

At the next step 202, for each pair of consecutive waypoints P1-P5 and P5-P8, the central server 3 determines one or more admissible road route sections which, according to the topology of the road network in the area concerned, allow travel from the first waypoint of the pair to the next waypoint.

For this purpose, preferably, the central server 3 defines a respective search area A1, A5, A8 around each waypoint P1, P5 and P8. The search areas preferably have a circular shape and have their centre at the respective waypoint P1, P5, P8. The central server 3 then preferably superimposes the cartographic data (for example in the form of a road graph, as described above) on the geographical map in which the waypoints P1, P5, P8 and the respective search areas A1, A5, A8 are represented. In order to determine the admissible road route section(s) between consecutive waypoints, the central server 3 preferably identifies the edge(s) of the road graph which fall at least partially within the search area A1, A5, A8. Then, for each pair of edges which fall at least partially within search areas of consecutive waypoints, the central server 3 preferably determines an admissible road route section as a concatenation of edges of the road graph which join together the two edges. In Figure 3, the arrows shown as continuous lines indicate the edges of the road graph which the central server 3 has identified as forming part of admissible road route sections, while the arrows shown as broken lines indicate other edges of the road graph not considered by the central server 3.

In Figure 3, by way of example, it is assumed that two edges E11, E12 partially fall within the search area A1 of the waypoint P1, that two edges E51 and E52 fall (totally and partially, respectively) within the search area A5 of the waypoint P5, and that two edges E81, E82 fall partially within the search area A8 of the waypoint P8. For the pair of adjacent waypoints P1-P5, the central server 3 then identifies two admissible road route sections E11-E51 and E12-E52 and, similarly, for the pair of adjacent waypoints P5-P8 the central server 3 identifies two admissible road route sections E51-E81 and E52-E82.

In the next step 203, the central server 3 preferably determines the possible road routes from the first waypoint P1 to the last waypoint P8, by concatenating the admissible road route sections E11-E51, E12-E52 and E51-E81, E52-E82. At this step also the central server 3 takes into account the topology of the road network as shown by the road graph. From this, for example, the central server 3 establishes that the section E11-E51 may be concatenated only with the section E51-E81 and not with the section E52-E82. The two possible road routes PP1 = E11-E51-E81 and PP2= E12-E52-E82 are thus identified.

Then, during the next step 204, the central server 3 preferably selects amongst the possible road routes PP1, PP2 the most probable road route, namely the one most likely followed by the vehicle 5. For this purpose, the central server 3 compares the originally acquired sequence of geographical positions P1, P2, ... P8 with each of the possible routes PP1, PP2 and calculates for each of them a respective parameter (for example a cost parameter) C1 and C2 indicating the probability that the vehicle 5 actually followed the road route PP1, PP2. The calculation of the cost parameter will be described in greater detail hereinbelow.

The most likely road route is then preferably chosen as being that with a minimum cost parameter C1, C2. For example, with reference to Figure 3, it can be understood that - given the arrangement of the geographical positions P1, P2, ... P8 - the cost parameter C1 of the route PP1 will be less than the cost parameter C2 of the route PP2. The central server 3 will therefore choose the route PP1 as the most probable road route.

The method according to the present invention advantageously results in a lower computational load and furthermore is advantageously reliable, also in the case where the roads are particularly close together (5-10 m), as occurs for example in urban environments.

The most complex step from the computational point of view is indeed step 202 of determining, for each pair of consecutive waypoints P1-P5 and P5-P8, the admissible road route sections according to the topology of the road network. According to the present invention, step 202 is performed only for the pairs of consecutive waypoints P1-P5 and P5-P8 and not for all the consecutive pairs of geographical positions P1, P2, ... P8 originally acquired by the on-board device 2 and received by the central server 3. If, for example, the vehicle 5 is travelling along a motorway section, very few significant events relating to its travel will be detected, because the vehicle 5 for most of the time will be travelling at a substantially constant speed and with few variations in its direction. Therefore, the waypoints - for which the admissible road route sections will be determined - will be much fewer than the total number of geographical positions originally acquired by the on-board device 2 and received by the central server 3. In the case mentioned above, for example, the selected waypoints are only 3 of 8 originally acquired geographical positions . This advantageously results in a reduction in the computational load required of the central server 3 in order to determine the admissible road route sections.

It should also be noted that determination of the admissible road route sections for the pairs of consecutive waypoints P1-P5 and P5-P8 may be performed in parallel, for example by different threads. This advantageously results in a reduction in the time for determining the overall road route between P1 and P8.

On the other hand, the method is also accurate with regard to reconstruction of the road route. In order to determine the waypoints, indeed, the central server 3 takes into account all the geographical positions P1, P2, ... P8 received from the on-board device 2 of the vehicle 5. If these are received with a high frequency (for example every few seconds) the central server 3 is therefore advantageously capable of detecting variations in the state of travel and direction or fast speeds and sudden accelerations. The central server 3 may thus generate waypoints when these variations occur, so as to take them into account when determining the road route of the vehicle 5.

The various steps of the method for determining the road route of a vehicle according to embodiments of the present invention will now be described in greater detail.

As mentioned above, the on-board device 2 preferably sends periodically to the central server 3 data indicating its geographical position. Preferably, said data comprises the geographical position in the form of geographical coordinates (latitude and longitude). Said data may be in compliance with the communications standards of the NMEA (National Marine Electronics Association). In this case, it comprises:
- latitude (GPGGA sentence);
- longitude (GPGGA sentence);
- date and time of the position (GPGGA sentence);
- direction of travel (heading, GPRMC sentence);
- speed (GPVTG sentence);
- HDOP (Horizontal dilution of precision, GPGGA sentence);
- RMS (root mean square of the geographical coordinates) and
- fix status (namely, an indication of the quality of the geolocation signal received from the system 6, calculated by the satellite receiver of the on-board device 2)

These data may also comprise other data (for example number of metres travelled by the vehicle from the last start-up, the number of axles of the vehicle and the weight of the vehicle), which however are not necessary for the central server 3 in order to determine the road route of the vehicle 5.

As for the cartographic data, as described above, it may be represented in the form of at least one road graph constructed from information relating to the topology of the road network (roads, one-way systems, limited traffic zones, etc.). The road graph is preferably stored in an internal memory of the central server 3, so as to be accessible to the central server 3 without the need for access to the database 4.

As regards the selection of the waypoints (step 201), as described above, these preferably represent the geographical positions at which significant events relating to the travel of the vehicle 5 are detected, such as changes in its travel state (from standstill to a moving state or vice versa), significant variations in its speed, or significant variations in its direction. In order to identify the waypoints, at step 201 the central server 3 preferably removes the unreliable geographical positions and the redundant geographical positions (for example those which substantially coincide because the vehicle 5 is essentially immobile).

The parameters for selection of the waypoints used by the central server 3 at step 201 preferably comprise one or more of the following:
- heading_{_}threshold: this is the threshold (for example expressed in degrees) above which the difference between the heading of the last waypoint selected and that of the geographical position considered is such that this geographical position is selected as the next waypoint. The value of this parameter may be for example between 25° and 45°;
- distance_{_}threshold: this is the threshold (for example in metres) above which the distance between the last waypoint selected and the geographical position considered is such that this geographical position is also selected as the next waypoint. The value of this parameter may be for example between 150 and 300 metres;
- vehicle_{_}stop_{_}speed_{_}threshold: this indicates the speed below which the vehicle 5 may be regarded as being essentially at a standstill;
- quality_{_}threshold: this is the threshold which, if exceeded by a quality indicator PQI indicating the reliability of a geographical position, is such that this is not selected as a waypoint in that not reliable. The PQI indicator is preferably calculated as the product of HDOP*RMS. The value of this parameter is preferably between 20 and 40, and for example may be equal to 30;
- investigate_threshold: this is the PQI threshold above which additional evaluations are carried out in order to determine a new waypoint, as described in detail below;
- investigate_{_}time: this is the time interval for establishing the stability of the PQI indicator. The value of this parameter is preferably between 100 seconds and 150 seconds, for example 120 seconds.
- max_{_}allowed_{_}speed: this is the maximum admissible speed of the vehicle. Geographical positions with speeds above this threshold are discarded. The value of this parameter may depend on the type of vehicle. For example, in the case of heavy goods vehicles above 7.5 tonnes it may be 150 km/h, while in the case of motor vehicles it may be 200 km/h;
- min_step_distance: minimum distance between consecutive waypoints. If a geographical position following the last waypoint selected has a distance from it less than the minimum distance, it is discarded. The value of this parameter may be 20 and 40 metres, for example it may be 30 metres;
- min_{_}distance_{_}after_{_}stop: minimum distance between a waypoint corresponding to stopping and the next waypoint. The value of this parameter may be for example between 30 and 50 metres.

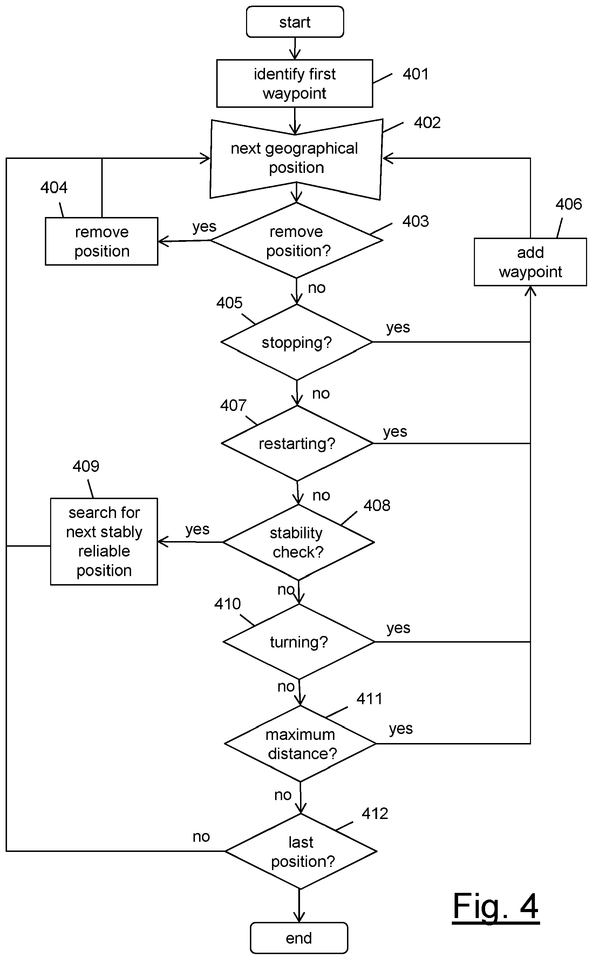

With reference to the algorithm in Figure 4, step 201 for selection of the waypoints according to an embodiment of the present invention will now be described in greater detail.

During a first sub-step 401, the central server 3 preferably identifies in the sequence of geographical positions received from the on-board device 2 the first waypoint. In order to identify the first waypoint, the central server 3 preferably scans through the sequence of geographical positions received from the on-board device 2, starting from the first position, and selects as the first waypoint the first geographical position, the speed of which is less than max_{_}allowed_{_}speed and the quality indicator PQI of which (for example calculated as the product of HDOP*RMS) is less than quality_{_}threshold.

Then, for each geographical position following the first waypoint (sub-step 402), the central server 3 preferably checks whether the position shall be removed (sub-step 403). Preferably, a geographical position is removed if it is not reliable and/or if at said position the vehicle 5 is too fast and/or if it is too close to the last waypoint selected and therefore redundant. In particular, at sub-step 403, the central server 3 preferably checks whether:
- the quality indicator PQI of the geographical position considered is greater than quality_{_}threshold;
- the speed at the geographical position considered is greater than max_{_}allowed_{_}speed; and
- the distance from the last waypoint selected is less than min_{_}step_{_}distance.

If at least one of these conditions is met, the geographical position considered is removed (sub-step 404) and the central server 3 subjects the next geographical position to the checks of sub-step 403.

If instead none of the aforementioned conditions is met for the geographical position concerned (namely it is reliable and in said position the vehicle 5 is neither too fast nor too close to the last selected waypoint), it is not removed and the central server 3 optionally checks whether it corresponds to a loss or reacquisition of the signal by the on-board device 2 (sub-step not shown in Fig. 4).

For example, at this sub-step the central server 3 selects the geographical position considered as waypoint if the fix status of the preceding geographical position and/or of the subsequent geographical position is equal to 1, said value indicating that the on-board device 2 has not received from the geolocation system 6 the geolocation signal with the geographical coordinates relating to that geographical position. If the fix status of the preceding geographical position is equal to 1, the geographical position considered is selected as waypoint since it corresponds to a signal reacquisition (for example due to the vehicle 5 exiting from a tunnel), while if the fix status of the subsequent geographical position is equal to 1, the geographical position considered is selected as waypoint since it corresponds to a signal loss (for example due to the vehicle entering into a tunnel).

If the geographical position considered does not correspond either to a geolocation signal loss or to a geolocation signal reacquisition, the central server 3 preferably checks whether it corresponds to a stopping of the vehicle (sub-step 405). In particular, at sub-step 405 the central server 3 preferably checks whether:
- the speed at the last waypoint selected was greater than vehicle_{_}stop_{_}speed_{_}threshold; and
- the speed at the geographical position considered is less than vehicle_{_}stop_{_}speed_{_}threshold.

If both these conditions are satisfied, the central server 3 concludes that the geographical position considered corresponds to a stopping of the vehicle.

In this case, the central server 3 preferably identifies the geographical position considered as waypoint (sub-step 406). Then it returns to sub-step 402 and applies the checks of sub-step 403 to the next geographical position.

If instead at sub-step 405 the central server 3 determines that the geographical position currently considered does not correspond to stopping of the vehicle, it preferably checks whether instead it corresponds to restarting of the vehicle (sub-step 407). In particular, at sub-step 407, the central server 3 preferably checks whether:
- the speed at the last waypoint selected was less than vehicle_stop_speed_threshold;
- the speed at the geographical position considered is greater than vehicle_{_}stop_{_}speed_{_}threshold; and
- the distance between the last waypoint selected and the geographical position currently considered is greater than min_{_}distance_{_}after_{_}stop.

If all these conditions are satisfied, the central server 3 concludes that the geographical position considered corresponds to restarting of the vehicle. Hence, the central server 3 preferably identifies the geographical position considered as a waypoint (sub-step 406), then returns to sub-step 402 and applies the checks of sub-step 403 to the next geographical position.

If, instead, at least one of the above conditions checked at sub-step 407 is not satisfied, the central server 3 determines that the geographical position considered does not correspond to restarting of the vehicle. Hence, it preferably checks whether a check as to the stability of the reliability is necessary (sub-step 408). This check - carried out after establishing at sub-step 407 that the vehicle 5 is moving - is carried out as a precautionary measure in the event of fluctuations of the reliability due to environmental contexts (for example urban canyons) where the geolocation signal received from the on-board device 2 may be disturbed and therefore the geographical positions determined may vary significantly with respect to the actual position of the vehicle 5. In particular, at sub-step 408 the central server 3 preferably checks whether the quality indicator PQI of the geographical position considered is greater than investigate_{_}threshold and, if so, concludes that verification of the stability is necessary.

If a stability check is necessary, the central server 3 preferably starts the search for the next geographical position which is stably reliable (sub-step 409). In particular, at sub-step 409 the central server 3 determines the next geographical position which is stably reliable such as that which satisfies the following conditions:
- its quality indicator PQI is less than investigate_threshold; and
- all the following geographical positions which fall within a time interval of duration investigate_{_}time have a quality indicator PQI less than investigate_threshold.

Once the next stably reliable geographical position has been found at sub-step 409, the central server 3 preferably returns to sub-step 402 and subjects it to the checks of sub-step 403 and the following checks.

If, instead, at sub-step 408 the central server 3 determines that no stability check is necessary, it preferably checks whether the geographical position considered corresponds to turning of the vehicle 5 (sub-step 410). In particular, at sub-step 410 the central server 3 preferably checks whether:
- the speed at the geographical position considered is greater than 0; and
- the difference between the heading of the last waypoint selected and the heading of the geographical position considered is greater than heading_{_}threshold.

If both these conditions are satisfied, the central server 3 preferably concludes that the geographical position considered corresponds to turning of the vehicle 5. In this case, the central server 3 preferably identifies the geographical position considered as a *waypoint* (sub-step 406). Then it returns to sub-step 402 and applies the checks of sub-step 403 to the next geographical position.

If instead at sub-step 410 the central server 3 determines that the geographical position considered does not correspond to turning of the vehicle, it preferably checks whether the distance between the last waypoint selected and the geographical position considered is greater than distance_{_}threshold (sub-step 411).

In the affirmative, the central server 3 preferably identifies the geographical position considered as a waypoint (sub-step 406). Then it returns to sub-step 402 and applies the checks of sub-step 403 to the next geographical position.

Otherwise, the geographical position examined is discarded (namely it is not selected as a waypoint) and the central server 3 returns to sub-step 402 and applies the checks of sub-step 403 to the next geographical position.

The preceding sub-steps are repeated until the last geographical position of the sequence received from the on-board device 2 is considered.

In this way the central server 3 therefore essentially chooses as waypoint the geographical positions corresponding to significant events relating to the travel of the vehicle 5 (stopping, restarting, turning and - optionally - entering in tunnels and exiting from tunnels), acting so that along straight constant-speed sections there are in any case waypoints at a certain maximum distance from each other and discarding geographical positions which are redundant (namely too close to each other) and/or not reliable.

The step of determining the road route sections between consecutive waypoints which are admissible according to the topology of the road network in the area concerned (step 202), according to an embodiment of the present invention, will now be described in greater detail.

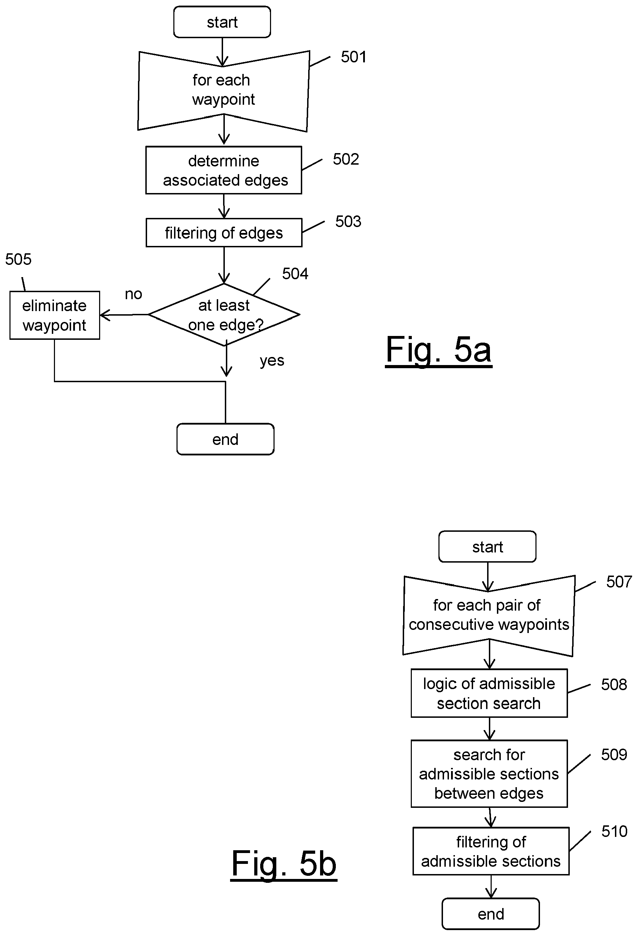

With reference to the flowchart of Figure 5a, for each waypoint selected at step 201 (501) the central server 3 preferably firstly determines the road graph edges associated with it (sub-step 502).

In particular, at sub-step 502 the central server 3 preferably defines around the waypoint considered a substantially circular search area with a certain radius. The radius of the search area preferably depends on the quality indicator PQI of the waypoint considered. In particular, the radius of the search area is preferably proportional to the quality indicator PQI such that the less the reliability of the geographical position, the broader the search area. The proportionality factor is preferably between 2 and 5, more preferably between 3 and 4. For example, the radius of the search area may be equal to (PQI*3.5), corresponding to the radius within which the vehicle is situated with a probability of 99.75%. According to a variant, a value which takes into account the width of the roadway may be added to the radius of the search area as calculated above.

Once the search area has been defined, at sub-step 502 the central server 3 preferably determines the edge(s) of the road graph associated with the waypoint, namely the edge(s) which at least partially fall within the area.

Then the central server 3 preferably performs a filtering of the edge(s) associated with the waypoint considered and found at sub-step 502 (sub-step 503). This filtering operation may be performed on the basis of one or more criteria.

A first criterion is based on the category of the vehicle and envisages eliminating from the edge(s) found at sub-step 502 those which are subject to the traffic restrictions applicable to the vehicle category.

A second filtering criteria is based on the direction of travel and envisages eliminating from the edge(s) found in step 502 those whose direction deviates excessively from the direction of travel of the vehicle 5 at the waypoint considered. In particular, according to an embodiment the central server 3 preferably performs the following filtering sub-steps:
- it checks whether the speed of the vehicle at the waypoint is greater than a predefined minimum threshold min_{_}speed_{_}threshold (the value of which may be for example 5 km/h) below which filtering based on the direction of travel is not applied; and
- if this is the case, it removes all the edges for which the difference between the direction of the edge and the direction of travel at the waypoint considered is greater than or equal to a certain predefined minimum threshold direction_{_}tolerance (the value of which is preferably 22.5° so as to define a cone of about 45° with respect to the direction of travel of the vehicle 5).

If, following the filtering sub-step 503, there is no edge of the road graph associated with the waypoint (sub-step 504), the central server 3 preferably eliminates the waypoint (sub-step 505).

If instead there is at least one edge associated with the waypoint, the central server 3 maintains the waypoint and then searches for the edges of the road graph associated with the next waypoint, repeating sub-steps 501-505.

Once the edges associated with each waypoint have been determined, the central server 3 preferably determines the admissible road route sections between pairs of consecutive waypoints.

In particular, with reference to Figure 5b, for each pair of consecutive waypoints obtained from the execution of the algorithm in Figure 5a (sub-507), the central server 3 preferably determines the logic to be used for searching for the admissible road route sections between the two waypoints of the pair considered, by analysing the sequence of geographical positions originally received from the on-board device 2 between the two waypoints (sub-step 508). For example:
- if in the sequence of geographical positions there is at least one missing position (namely one with fix status equal to 1), the central server 3 preferably determines that the vehicle 5 has probably passed through a tunnel between the two waypoints of the pair considered and will therefore preferably give priority to edges of the road graph which represent the tunnel (this is optional and may be omitted if, at step 202, the geographical positions where a geolocation signal loss or reacquisition occurs have been selected as waypoints, as described above with reference to Fig. 4); and
- if the geographical positions indicate a reversal in the direction of travel, the central server 3 preferably will not exclude from the search of the admissible road route sections combinations of road graph edges, travel along which involves a reversal in the direction of travel. These combinations of edges will instead be excluded from the search if the geographical positions between the two waypoints do not indicate a reversal in the direction of travel.

At sub-step 508, the central server 3 preferably calculates also the distance between the two waypoints of the pair considered, where "distance" is understood as meaning the length of the curve which passes through all the geographical positions included between the two waypoints of the pair considered. This distance (indicated as D_{_}hav below) may be for example calculated by applying the Haversine formula to each pair of consecutive geographical positions included between the two waypoints of the pair considered.

Then, the central server 3 preferably determines in the road graph of the area concerned the admissible road route sections which join together each edge associated with the first waypoint of the pair considered and each edge associated with the second waypoint of the pair considered (sub-step 509). The edges associated with the waypoints are those determined and filtered by executing the algorithm of Figure 5a.

According to a preferred variant, at sub-step 509 the central server 3 preferably performs, for each edge associated with the first waypoint of the pair considered, Dijkstra's algorithm in relation to all the edges associated with the second waypoint of the pair considered. The weight associated with each edge in the road graph is preferably based on its length.

If at sub-step 508 it was determined that the vehicles has travelled through a tunnel, a weight 0 is preferably assigned to the road graph edges which represent tunnels so as give them priority. If at sub-step 508 no reversal in the direction of travel was detected, the central server 3 preferably excludes combinations of edges which involve a reversal in the direction of travel.

Preferably, at sub-step 509 the central server 3 excludes the road route sections which in theory would be admissible according to the topology of the road network, but whose length deviates excessively from the calculated distance D_{_}hav between the two waypoints. For example, the central server 3 may exclude the road route sections whose length is greater than D_{_}hav * 1.5.

At the end of sub-step 509, therefore, the central server 3 has determined one or more admissible road route sections between the pair of consecutive waypoints considered. For each admissible road route section determined, the originally acquired geographical positions comprised between the two waypoints of the considered pair are projected on it. The edge on which each geographical position is to be projected is preferably determined as the edge at a minimum distance from the geographical position amongst those forming the admissible road route section, where such distance is calculated using known formulae for the calculation of the distance between one point and a segment. Each edge of each admissible road route section therefore preferably has associated information identifying the geographical position(s) projected on it and, for each position, its distance from the edge and the distance between its projection on the edge and the front end of the edge (its projection being the point of intersection between the edge and the straight line perpendicular to the edge and passing through the geographical position).

The central server 3 then preferably performs filtering of the road route sections determined at sub-step 509 (sub-step 510), so as to eliminate road route sections which are admissible, but unlikely.

In order to perform this filtering operation, the central server 3 firstly establishes which filtering criterion to use, depending on the information extrapolated from the geographical positions between the two waypoints of the pair considered. The filtering may for example be based on the value of the metrics calculated for the admissible road route section. These metrics preferably are calculated on the basis of the comparison between the curve which passes through all the geographical positions between the two waypoints of the pair considered and the admissible road route section between said waypoints, for example:
- Fréchet distance between the curve which passes through all the geographical positions included between the two waypoints of the pair considered and the admissible road route section between said waypoints;
- Fréchet distance obtained after applying the transformations which bring the centroid of the curve which passes through all the geographical positions included between the two waypoints of the pair considered into the centroid of the admissible road route section waypoint;
- difference between the length of the admissible road route section between the two waypoints of the pair considered and the distance D_{_}hav between the two waypoints;
- mean of the distances between the geographical positions and their respective projections on the corresponding edge of the admissible road route section between the two waypoints of the pair considered;
- difference between the nominal travel time of the admissible road route section between the two waypoints of the pair considered, based on the speed limits defined on the edges which form it and the actual travel time between the two waypoints of the pair considered (or the temporal distance between passing through of said waypoints).

Once the appropriate metric (or combination of metrics) has been chosen, it is calculated for all the admissible road route sections determined at sub-step 509 and used by the central server 3 to eliminate the road route sections which are admissible, but unlikely. For example in the case where the Fréchet distance is used as metric, at sub-step 510 the central server 3 may decide to eliminate the admissible road route sections which have a Fréchet distance greater than a certain predefined maximum threshold max_{_}frechet, because too different from the sequence of geographical positions between the two consecutive waypoints.

Instead of or in combination with the Fréchet distance, the central server 3 may use as metric the difference between the nominal and actual travel times. With reference again to the situation illustrated by way of example in Figure 3, the two road route sections N1-N51 and N1-N52 may belong to different classes (for example N1-N51 is a motorway and N1-N52 is an urban road) and therefore have different speed limits (and therefore nominal travel times). If the speed of the vehicle 5 between P1 and P5 is 130 km/h, from among the admissible road route sections between P1 and P5 the central server 3 will eliminate the urban road N1-N52, which typically has 50 km/h as a speed limit and therefore a travel time which is certainly greater than that actually taken by the vehicle 5 between P1 and P5 (determined on the basis of the time at the geographical positions P1 and P2). The urban road route section N1-N52 will therefore be eliminated since unlikely, even though admissible from a topological point of view.

The filtering of the road route sections which are admissible, but unlikely, performed at sub-step 510 on the basis of one or more metrics as described above advantageously allows an increase in the accuracy with which the road route of the vehicle 5 is determined.

Step 203 of determining one or more possible road routes from the first waypoint to the last waypoint will now be described in greater detail.

As mentioned above, each possible road route is obtained by the central server 3 by concatenating the admissible road route sections determined at the preceding step 202 described above.

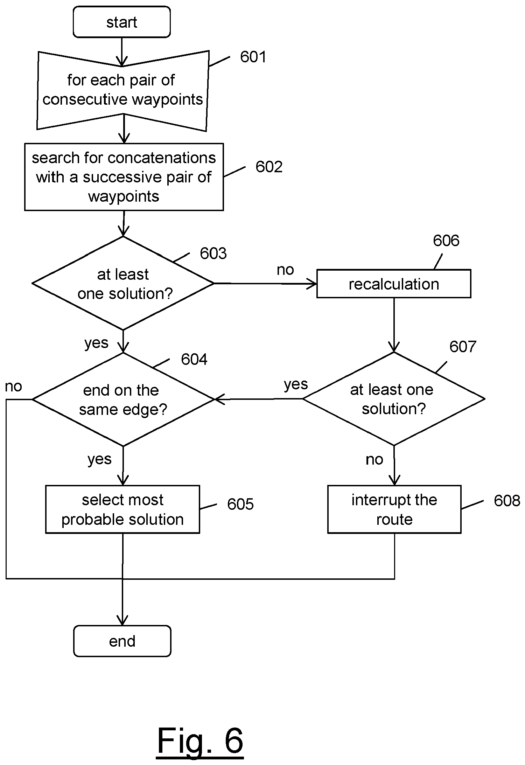

In particular, with reference to the flowchart in Figure 6, starting from the first pair of consecutive waypoints (sub-step 601), the central server 3 preferably searches for any concatenation(s) with the next pair of consecutive waypoints (sub-step 602). More particularly, for each admissible road route section determined for the first pair of waypoints at step 202, the central server 3 preferably determines whether this may be concatenated (according to the topology of the road graph) with at least one admissible road route section from among those determined for the next pair of waypoints. Preferably, at sub-step 602 the central server 3 compiles a list of possible solutions, namely possible concatenations.

If for example at the j-th iteration (j ≥ 1) there is at least one solution which joins the first waypoint and (j+1)-th waypoint (sub-step 603), the central server 3 preferably checks whether among the possible solutions of the list there are some which terminate on the same edge associated with last (j+1)-th waypoint considered in the concatenation (sub-step 604).

If there are none (the solutions all terminate on different edges), the central server 3 preferably returns to sub-steps 601-602, searching in each possible solution of the list for the concatenation with an admissible road route section between the pair of successive waypoints (j+1)-th and (j+2)-th waypoint.

If instead at least two of the possible solutions end on the same edge associated with the last (j+1)-th waypoint, the central server 3 preferably chooses from among these solutions the most probable one (preferably applying the same criteria used at sub-step 204 and described in greater detail hereinbelow) and eliminates the other solution(s) from the list of possible solutions (sub-step 605). The central server 3 then returns to sub-steps 601-602, searching, in each solution left in the list following elimination 605, for the concatenation with an admissible road route section between the successive pair of consecutive waypoints ((j+1)-th waypoint and (j+2)-th waypoint).

For as long as there is at least one possible solution in the list, the concatenation with successive sections continues, until the last pair of consecutive waypoints is reached. In this way, at the end of execution of the algorithm in Figure 6, the list will contain at least one possible solution (namely at least one possible road route) between the first and the last waypoint. In the case of several solutions, these will terminate on different edges associated with the last waypoint.

If, instead at the j-th iteration (j ≥1) of the check 603 the central server 3 determines that there are no possible solutions which join together the first waypoint and (j+1)-th waypoint (empty list), the central server 3 preferably performs a recalculation of the admissible road route sections between the j-th waypoint and (j+1)-th waypoint (sub-step 606). In order to perform this recalculation, for example, the central server 3 may consider the presence of tunnels and/or reversals in the direction of travel. In particular, at sub-step 606, the central server 3 preferably determines again the admissible road route sections between the j-th waypoint and the (j+1)-th waypoint, modifying any restrictions used in step 202, for example enabling the reversals in direction of travel and disabling the filtering of travel routes without tunnels. If this recalculation also does not provide any solution between the first waypoint and the (j-1)-th waypoint, the central server 3 preferably determines again the admissible road route sections between the (j-1)-th waypoint and j-th waypoint, modifying any restrictions used in step 202 as described above. If after this recalculation there is still no solution between the first waypoint and the (j+1)-th waypoint, the central server 3 goes back one step in the recalculation of the admissible road route sections. This reverse recalculation may be repeated for a maximum number of k iterations, namely until the admissible road route sections between the (j-k+1)-th waypoint and (j-k+2)-th waypoint can be determined again. Preferably, at sub-step 606 the central server 3 updates the list of possible solutions on the basis of the results of the iterative recalculations.

If, during the iterative recalculations of sub-step 606, at least one solution which joins together the first waypoint and the (j+1)-th waypoint is found (sub-step 607), the central server 3 preferably checks again whether, from among the possible solutions, there are some solutions which terminate on the same edge associated with the last (j+1)-th waypoint considered in the concatenation (sub-step 604). If such solutions are present, it chooses the best solution (sub-step 605) and then returns to sub-steps 601-602, searching in each solution of the list for the concatenation with an admissible road route section between the successive pair of waypoints (j+1-th) waypoint and (j+2)-th waypoint).

If, instead, even the iterative recalculations of sub-step 606 are unable to provide a possible solution between the first waypoint and the (j+1)-th waypoint (sub-step 607), the central server 3 preferably concludes that there is an interruption in the road route between the j-th waypoint and the (j+1)-th waypoint (sub-step 608).

The central server 3 then returns to sub-steps 601-602 in order to search for possible road routes between the (j+1)-th waypoint and the last waypoint. The central server 3 in this case will output one or more partial possible road routes which will have a "gap" between the j-th waypoint and the (j+1)-th waypoint.

Below, a more detailed description is provided in connection with step 204 of the flowchart according to Figure 2 in which the central server 3 selects, from among the possible road routes (including partial routes as described above) determined during the preceding step 203, the most probable route, namely the route which has most likely been followed by the vehicle 5.

As described above with reference to Figure 5b (determination of the admissible road route sections between consecutive waypoints), for each of the admissible road route sections (determined for example by means of Dijkstra's algorithm), at the filtering sub-step 510 a metric or a combination of several metrics (for example the Fréchet distance from the curve which passes through the geographical positions detected by the on-board device 2) is calculated. This metric, used at sub-step 510 for filtering road routes which are admissible but unlikely, at step 204 is preferably used to calculate, for each possible road route determined at step 203 (including the partial ones, if any), the value of a parameter indicating the probability that the vehicle 5 actually followed that possible road route.

This parameter may be for example a cost parameter, the value of which is inversely proportional to the probability that the vehicle 5 actually followed that possible road route. For example, in order to calculate the cost parameter of each possible road route, the central server 3 preferably combines the metrics calculated for each road route section which forms part thereof. For example, in the case where the metric is the Fréchet distance, the cost parameter of each road route may be calculated by summing up the Fréchet distances calculated at sub-step 510 for the road route sections which form it.

Once the cost parameter for all the possible road routes has been calculated, the most probable road route is preferably chosen by the central server 3 as the one which has the lowest cost parameter.

It should be noted that the use of the cost parameter and its minimum value as criterion for choosing the most probably road route is not the only possible option. According to other embodiments, the central server 3 could calculate for each possible road route, instead of a cost parameter, a merit parameter, the value of which is proportional (and not inversely proportional) to the probability that the vehicle 5 has actually followed that possible road route. In this case, the most probable road route will be chosen as that which has a merit parameter with the highest value

## Claims

1. Apparatus (3) for determining the road route of a vehicle (5), said apparatus (3) being configured to:
a) receive from an on-board device (2) installed on board said vehicle (5) data indicating a sequence of geographical positions (P1, P2, ... P8) through which said vehicle (5) has passed;
b) select from said sequence of geographical positions (P1, P2, ... P8) a set of reference points (P1, P5, P8) at which significant events relating to the travel of said vehicle (5) are detected, a significant event relating to the travel of said vehicle (5) comprising at least one of stopping, restarting and turning of said vehicle (5);
c) for each pair of consecutive reference points (P1-P5, P5-P8), determine one or more admissible road route sections allowing to travel from the first reference point (P1, P5) of the pair to the second reference point (P5, P8) of the pair according to cartographic data indicating the topology of the road network in an area comprising said sequence of geographical positions (P1 , P2, ... P8);
d) determine one or more possible road routes between the first one of said reference points (P1) and the last one of said reference points (P8) by concatenating said admissible road route sections; and
e) identify the most probable road route amongst said one or more possible road routes based on values of a parameter indicating the probability that said vehicle (5) actually followed a possible road route, each value of said parameter being calculated by comparing said sequence of geographical positions of said vehicle (5) with one of said possible road routes.

2. Apparatus (3) according to claim 1, wherein said data indicating said sequence of geographical positions (P1, P2, ... P8) comprises, for each geographical position, at least one of:
- geographical coordinates of said geographical position;
- date and time of said geographical position;
- direction and speed of said vehicle (5) at said geographical position; and
- information indicating the reliability of said geographical position.

3. Apparatus (3) according to claim 2, wherein said apparatus (3) is configured, when selecting said set of reference points (P1, P5, P8), to remove at least one geographical position from said sequence of geographical positions (P1, P2, ... P8), said at least one geographical position being removed if:
- on the basis of said information indicating the reliability of said geographical position, it is determined that said geographical position is unreliable; and/or
- on the basis of said geographical coordinates of said geographical position, it is determined that said geographical position is redundant in that the distance between said geographical position and the last selected reference point is shorter than a minimum distance allowed between consecutive reference points.

4. Apparatus (3) according to claim 2 or 3, wherein said apparatus (3) is also configured, when selecting said set of reference points (P1, P5, P8), to select a geographical position of said sequence of geographical positions (P1, P2, ... P8) as a reference point if:
- on the basis of said speed of said vehicle (5) at said geographical position and said speed of said vehicle (5) at the last selected reference point, it is determined that said geographical position corresponds to stopping or to restarting of said vehicle (5); or
- on the basis of said direction of said vehicle (5) at said geographical position and said direction of said vehicle (5) at the last selected reference point, it is determined that said geographical position corresponds to turning of said vehicle (5); or
- it is determined that said geographical position has a distance from the last selected reference point greater than a maximum allowed distance between consecutive reference points.

5. Apparatus (3) according to any one of the preceding claims, wherein said apparatus (3) is configured, when selecting said set of reference points (P1, P5, P8), to select a geographical position of said sequence of geographical positions (P1, P2, ... P8) as a reference point also when said geographical position corresponds to a loss or reacquisition of the geolocation signal by said on-board device (2).

6. Apparatus (3) according to any one of the preceding claims, wherein said cartographic data comprise a road graph representing said topology of said road network.

7. Apparatus (3) according to claim 6, wherein said apparatus (3) is also configured, when determining said one or more admissible road route sections:
- for each selected reference point (P1, P5, P8), to identify at least one edge (E11, E12, E51, E52; E81, E82) of said road graph that falls at least partially within a search area (A1, A5, A8) defined around said reference point (P1, P5, P8); and
- for each pair of edges (E11-E51, E12-E52, E51-E81, E52-E82) that falls at least partially within search areas defined around consecutive reference points, to determine at least one admissible road route section as a concatenation of edges of said road graph joining said pair of edges (E11-E51, E12-E52, E51-E81, E52-E82).

8. Apparatus (3) according to claim 7, wherein said apparatus (3) is also configured, when determining one or more admissible road route sections, for each pair of consecutive reference points (P1-P5, P5-P8), to perform a filtering of any admissible but unlikely road route sections, said filtering being based on one or more metrics calculated for each admissible road route section between said pair of consecutive reference points (P1-P5, P5-P8), said one or more metrics comprising:
- at least one metric indicating a distance or similarity between a curve passing through the geographic positions comprised between said pair of consecutive reference points (P1-P5, P5-P8) and said admissible road route section between said pair of consecutive reference points (P1-P5, P5-P8); and/or
- at least one metric indicating the difference between a nominal travel time of said admissible road route section between said pair of consecutive reference points (P1-P5, P5-P8) and an actual travel time between said pair of consecutive reference points (P1-P5, P5-P8).

9. Apparatus (3) according to any one of the preceding claims, wherein said apparatus (3) is configured, when determining said one or more possible road routes, to perform an iterative process comprising:
d1) determining any concatenation of admissible road route sections joining the first reference point (P1) and the (j+1)-th reference point, j being equal to 1 at the first iteration of said step d1) and increasing by 1 at each subsequent iteration of said step d1);
d2) if at the j-th iteration of step d1) at least one concatenation of admissible road route sections joining the first reference point and the (j+1)-th reference point is determined, performing a new iteration of said step d1 );
d3) if at the j-th iteration of step d1) no concatenation is determined:
- re-determining admissible road route sections starting from the pair of consecutive j-th and (j+1)-th reference points backwards up to a maximum of k pairs of consecutive (j-k+1)-th and (j-k+2)-th reference points and determining possible concatenations of admissible road route sections joining the first reference point (P1) and the (j+1)-th reference point by using said re-determined admissible road route sections;
- if at least one concatenation is determined, performing a new iteration of step d1);
- if no concatenation is determined, concluding that there is an interruption in the road route between the pair of consecutive j-th and (j+1)-th reference points and performing a new iteration of step d1) to determine at least one concatenation of admissible road route sections joining the (j+1)-th reference point and the last reference point (P8).

10. Apparatus (3) according to any one of the preceding claims, said apparatus (3) being configured to, when identify said most probable road route, calculating said parameter for each possible road route:
- on the basis of a distance or similarity between a curve passing through said sequence of geographical positions (P1, P2, ... P8) and said possible road route; and/or
- on the basis of the difference between a nominal travel time of said possible road route and an actual travel time of said sequence of geographical positions (P1, P2, ... P8).

11. Method performed by an apparatus for determining the road route of a vehicle (5), said method comprising:
- receiving from an on-board device (2) installed on board said vehicle (5) data indicating a sequence of geographical positions (P1, P2, ... P8) through which said vehicle (5) has passed;
- selecting from said sequence of geographical positions (P1, P2, ... P8) a set of reference points (P1, P5, P8) at which significant events relating to the travel of said vehicle (5) are detected, a significant event relating to the travel of said vehicle (5) comprising at least one of stopping, restarting and turning of said vehicle (5);
- for each pair of consecutive reference points (P1-P5, P5-P8), determining one or more admissible road route sections allowing to travel from the first reference point (P1, P5) of the pair to the second reference point (P5, P8) of the pair according to cartographic data indicating the topology of the road network in an area comprising said sequence of geographical positions (P1, P2, ... P8);
- determining one or more possible road routes between the first one of said reference points (P1) and the last one of said reference points (P8) by concatenating said admissible road route sections; and
- identifying the most probable road route amongst said one or more possible road routes based on values of a parameter indicating the probability that said vehicle (5) actually followed a possible road route, each value of said parameter being calculated by comparing said sequence of geographical positions of said vehicle (5) with one of said possible road routes.

12. Satellite tolling system (1) comprising the apparatus (3) according to any one of claims 1-10.

13. Computer program loadable in the memory of a computer and comprising software code portions for performing the steps of the method according to claim 11, when said program is executed by said computer.

## Patentansprüche

1. Vorrichtung (3) zum Bestimmen der Straßentrasse eines Fahrzeugs (5), wobei die Vorrichtung (3) ausgestaltet ist, um:
a) von einer an Bord des Fahrzeugs (5) installierten Bordvorrichtung (2) Daten zu empfangen, die eine Abfolge von geografischen Positionen (P1, P2, ... P8) angeben, die das Fahrzeug (5) durchfahren hat;
b) einen Satz von Bezugspunkten (P1, P5, P8) aus der Abfolge von geografischen Positionen (P1, P2, ... P8) auszuwählen, an denen bedeutsame Ereignisse in Bezug auf die Fahrt des Fahrzeugs (5) erfasst werden, wobei ein bedeutsames Ereignis in Bezug auf die Fahrt des Fahrzeugs (5) mindestens eines von den Elementen Anhalten, wieder Anfahren und Wenden des Fahrzeugs (5) aufweist;
c) für jedes Paar von aufeinander folgenden Bezugspunkten (P1-P5, P5-P8) einen oder mehrere zulässige Abschnitte von Straßentrassen zu bestimmen, die es erlauben, vom ersten Bezugspunkt (P1, P5) des Paares zum zweiten Bezugspunkt (P5, P8) des Paares zu fahren, gemäß kartographischen Daten, die die räumliche Struktur des Straßennetzes in einem Gebiet angeben, das die Abfolge von geografischen Positionen (P1, P2, ... P8) aufweist;
d) eine oder mehrerer mögliche Straßentrassen zwischen dem ersten der Bezugspunkte (P1) und dem letzten der Bezugspunkte (P8) durch Verketten der zulässigen Abschnitte der Straßentrassen zu bestimmen; und
e) die wahrscheinlichsten Straßentrasse unter der einen oder den mehreren möglichen Straßentrassen zu ermitteln auf der Grundlage von Werten eines Parameters, der die Wahrscheinlichkeit anzeigt, dass das Fahrzeug (5) tatsächlich einer möglichen Straßentrasse gefolgt ist, wobei jeder Wert des Parameters durch Vergleich der Abfolge von geographischen Positionen des Fahrzeugs (5) mit einer der möglichen Straßentrassen berechnet wird.

2. Vorrichtung (3) nach Anspruch 1, wobei die Daten, die die Abfolge der geografischen Positionen (P1, P2, ... P8) angeben, für jede geographische Position mindestens eines der folgenden Elemente aufweisen:
- geographische Koordinaten der geographischen Position;
- Datum und Uhrzeit der geographischen Position;
- Richtung und Geschwindigkeit des Fahrzeugs (5) an dieser geografischen Position; und
- Informationen, die die Zuverlässigkeit der geografischen Position angeben.

3. Vorrichtung (3) nach Anspruch 2, wobei die Vorrichtung (3) ausgestaltet ist, um beim Auswählen des Satzes von Bezugspunkten (P1, P5, P8) mindestens eine geographische Position aus der Abfolge von geographischen Positionen (P1, P2, ...P8) zu entfernen, wobei die mindestens eine geographische Position entfernt wird, wenn:
- auf der Grundlage der Informationen, die die Zuverlässigkeit der geografischen Position anzeigt, festgestellt wird, dass die geografische Position unzuverlässig ist; und/oder
- auf der Grundlage der geografischen Koordinaten der geografischen Position festgestellt wird, dass die geografische Position insofern überflüssig ist, als der Abstand zwischen der geografischen Position und dem letzten gewählten Bezugspunkt kürzer ist als ein Mindestabstand, der zwischen aufeinanderfolgenden Bezugspunkten zulässig ist.

4. Vorrichtung (3) nach Anspruch 2 oder 3, wobei die Vorrichtung (3) auch ausgelegt ist, um bei der Auswahl des Satzes von Bezugspunkten (P1, P5, P8) eine geographische Position aus der Abfolge der geographischen Positionen (P1, P2, ... P8) als ein Bezugspunkt auszuwählen, wenn:
- auf der Grundlage der Geschwindigkeit des Fahrzeugs (5) an dieser geographischen Position und der Geschwindigkeit des Fahrzeugs (5) an dem letzten gewählten Bezugspunkt festgestellt wird, dass die geografische Position dem Anhalten oder dem Wiederanfahren des Fahrzeugs (5) entspricht; oder
- auf der Grundlage der Richtung des Fahrzeugs (5) an der geografischen Position und der Richtung des Fahrzeugs (5) am letzten gewählten Bezugspunkt bestimmt wird, dass die geografische Position einem Abbiegen des Fahrzeugs (5) entspricht; oder
- festgestellt wird, dass die geografische Position einen Abstand zum letzten gewählten Bezugspunkt aufweist, der größer ist als ein maximal zulässiger Abstand zwischen aufeinanderfolgenden Bezugspunkten.

5. Vorrichtung (3) nach irgendeinem der vorhergehenden Ansprüche, wobei die Vorrichtung (3) ausgelegt ist, um beim Auswählen des Satzes von Bezugspunkten (P1, P5, P8) eine geografische Position der Abfolge von geografischen Positionen (P1, P2, ... P8) als ein Bezugspunkt auch dann auszuwählen, wenn die geografische Position einem Verlust oder einer Wiedererlangung des Geolokalisierungssignals durch die Bordvorrichtung (2) entspricht.

6. Vorrichtung (3) nach irgendeinem der vorhergehenden Ansprüche, wobei die kartographischen Daten ein Straßendiagramm aufweisen, das die räumliche Struktur des Straßennetzes darstellt.

7. Vorrichtung (3) nach Anspruch 6, wobei die Vorrichtung (3) auch ausgelegt ist, um beim Bestimmen des einen oder der mehreren, zulässigen Abschnitte von Stra-ßentrassen:
- für jeden ausgewählten Referenzpunkt (P1, P5, P8) mindestens einen Rand (E11, E12, E51, E52; E81, E82) der Straßengraphik zu erkennen, der zumindest teilweise in ein Suchbereich (A1, A5, A8) fällt, der um den Bezugspunkt (P1, P5, P8) festgelegt ist; und
- für jedes Paar von Rändern (E11-E51, E12-E52, E51-E81, E52-E82), das zumindest teilweise innerhalb der Suchbereiche fällt, die um aufeinanderfolgende Bezugspunkte herum festgelegt sind, um mindestens einen zulässigen Abschnitt der Straßentrasse als eine Verkettung von Rändern der Straßengraphik zu bestimmen, die das Paar der Ränder (E11-E51, E12-E52, E51-E81, E52-E82) verbinden.

8. Vorrichtung (3) nach Anspruch 7, wobei die Vorrichtung (3) auch ausgelegt ist, um beim Bestimmen eines oder mehrerer zulässiger Abschnitte der Straßentrassen für jedes Paar von aufeinanderfolgenden Bezugspunkten (P1- P5, P5-P8), ein Filtern von irgendeiner zulässigen, aber unwahrscheinliche Abschnitte der Straßentrassen durchzuführen, wobei das Filtern auf einer oder mehreren Kennzahlen basiert, die für jeden zulässigen Abschnitt der Straßentrassen zwischen dem Paar aufeinanderfolgender Bezugspunkte (P1-P5, P5-P8) berechnet werden, wobei die eine oder mehreren Kennzahlen aufweisen:
- mindestens eine Kennzahl, die einen Abstand oder eine Ähnlichkeit zwischen einer Kurve angibt, die durch die geografischen Positionen verläuft, die aus den zwischen dem Paar von aufeinanderfolgenden Bezugspunkten (P1-P5, P5-P8) und dem zulässigen Abschnitt der Straßentrasse zwischen dem Paar von aufeinanderfolgenden Bezugspunkten (P1-P5, P5-P8) gebildet werden; und/oder
- mindestens eine Kennzahl, die die Differenz zwischen einer nominellen Fahrzeit des zulässigen Abschnitts der Straßentrasse zwischen dem Paar aufeinanderfolgender Bezugspunkte (P1-P5, P5-P8) und einer tatsächlichen Fahrzeit zwischen dem Paar aufeinanderfolgender Bezugspunkte (P1-P5, P5-P8) angibt.

9. Vorrichtung (3) nach irgendeinem der vorhergehenden Ansprüche, wobei die Vorrichtung (3) ausgestaltet ist, um beim Bestimmen der einer oder mehrerer möglicher Straßentrassen, ein iteratives Verfahren auszuführen, dass aufweist:
d1) Bestimmen einer beliebigen Verkettung von zulässigen Abschnitten von Straßentrassen, die den ersten Bezugspunkt (P1) und den (j+1)-ten Bezugspunkt verbinden, wobei j bei der ersten Iteration des Schritts d1) gleich 1 ist und bei jeder nachfolgenden Iteration des Schritts d1) um 1 erhöht wird;
d2) wenn bei der j-ten Iteration des Schritts d1) mindestens eine Verkettung zulässiger Abschnitte von Straßentrassen bestimmt wird, die den ersten Bezugspunkt und den (j+1)-ten Bezugspunkt verbinden, wird eine neue Iteration des Schritts d1) durchgeführt;
d3) wenn bei der j-ten Iteration von Schritt d1) keine Verkettung bestimmt wird:
- werden zulässige Abschnitte von Straßentrassen ausgehend von dem Paar aufeinanderfolgender j-ter und (j+1)-ter Bezugspunkte rückwärts bis zu einem Maximum von k Paaren aufeinanderfolgender (j-k+1)-ter und (j-k+2)-ter Bezugspunkte erneute bestimmt und werden mögliche Verkettungen zulässiger Abschnitten von Straßentrassen, die den ersten Bezugspunkt (P1) und dem (j+1)-ten Bezugspunkt verbinden unter dem Verwenden der neu bestimmten zulässigen Abschnitte von Stra-ßentrassen bestimmt;
- wenn mindestens eine Verkettung bestimmt wird, wird eine neue Iteration von Schritt d1) durchgeführt;
- wenn keine Verkettung bestimmt wird, wird gefolgert, dass es eine Unterbrechung in der Straßentrasse zwischen dem Paar von aufeinanderfolgenden j-ten und (j+1)-ten Bezugspunkten gibt, und eine neue Iteration von Schritt d1) wird durchgeführt, um mindestens eine Verkettung von zulässigen Abschnitten von Straßentrassen zu bestimmen, die den (j+1)-ten Bezugspunkt und den letzten Bezugspunkt (P8) verbinden.

10. Vorrichtung (3) nach irgendeinem der vorhergehenden Ansprüche, wobei die Vorrichtung (3) ausgestaltet ist, um beim Ermitteln der wahrscheinlichsten Straßentrasse den Parameter für jede mögliche Straßentrasse zu berechnen:
- auf der Grundlage eines Abstands oder einer Ähnlichkeit zwischen einer Kurve, die durch die Abfolge von geografischen Positionen (P1, P2, ... P8) und der möglichen Straßentrassen verläuft; und/oder
- auf der Grundlage der Differenz zwischen einer Soll-Fahrzeit der möglichen Straßentrassen und einer Ist-Fahrzeit der Abfolge von geografischen Positionen (P1, P2, ... P8).

11. Verfahren, durchgeführt von einer Vorrichtung zum Bestimmen der Straßentrasse eines Fahrzeugs (5), wobei das Verfahren aufweist:
- Empfangen von Daten von einer Bordvorrichtung (2), die an Bord des Fahrzeugs (5) installiert ist, die eine Abfolge von geographischen Positionen (P1, P2, ... P8) angeben, die das Fahrzeug (5) durchfahren hat;
- Auswählen eines Satzes von Bezugspunkten (P1, P5, P8) aus der Abfolge von geografischen Positionen (P1, P2, ... P8), an denen bedeutsame Ereignisse in Bezug auf die Fahrt des Fahrzeugs (5) erfasst werden, wobei ein bedeutsames Ereignis in Bezug auf die Fahrt des Fahrzeugs (5) mindestens eines von den Element Anhalten, wieder Anfahren und Wenden des Fahrzeugs (5) aufweist;
- für jedes Paar aufeinanderfolgender Bezugspunkte (P1-P5, P5-P8) wird/werden eines oder mehrere zulässige Abschnitte von Straßentrassen bestimmt, die ermöglicht vom ersten Bezugspunkt (P1, P5) des Paares zum zweiten Bezugspunkt (P1, P8) des Paares zu fahren, gemäß kartographischen Daten, die die räumliche Struktur des Straßennetzes in einem Bereich anzeigen, der die Abfolge von geographischen Positionen (P1, P2, ... P8) aufweist;
- Bestimmen einer oder mehrerer möglichen Straßentrassen zwischen dem ersten der Bezugspunkte (P1) und dem letzten der Bezugspunkte (P8) durch Verketten der zulässigen Abschnitte von Straßentrassen; und
- Ermitteln der wahrscheinlichsten Straßentrasse unter der einen oder mehreren möglichen Straßentrassen auf der Grundlage von Werten eines Parameters, der die Wahrscheinlichkeit angibt, dass das Fahrzeug (5) tatsächlich einer möglichen Straßentrasse folgt, wobei jeder Wert des Parameters berechnet wird, indem die Abfolge von geografischen Positionen des Fahrzeugs (5) mit einer der möglichen Straßentrasse verglichen wird.

12. Satellitenbasierte Anlage zum Verlangen von Straßenzoll (1) die die Vorrichtung (3) nach irgendeinem der Ansprüche 1-10 aufweist.

13. Computerprogramm, das in den Speicher eines Computers geladen werden kann und Software-Codeabschnitte zum Durchführen der Schritte vom Verfahren nach Anspruch 11 aufweist, wenn das Programm von dem Computer ausgeführt wird.

## Revendications

1. Appareil (3) permettant de déterminer l'itinéraire routier d'un véhicule (5), ledit appareil (3) étant configuré de manière à :
a) recevoir, en provenance d'un dispositif embarqué (2) installé à bord dudit véhicule (5), des données indiquant une séquence de positions géographiques (P1, P2, ..., P8) par lesquelles ledit véhicule (5) est passé ;
b) sélectionner, dans ladite séquence de positions géographiques (P1, P2, ..., P8), un ensemble de points de référence (P1, P5, P8) auxquels sont détectés des événements significatifs connexes au déplacement dudit véhicule (5), un événement significatif connexe au déplacement dudit véhicule (5) comprenant au moins un arrêt, un redémarrage et un virage dudit véhicule (5) ;
c) pour chaque paire de points de référence consécutifs (P1-P5, P5-P8), déterminer un ou plusieurs tronçons d'itinéraires routiers admissibles permettant de se déplacer du premier point de référence (P1, P5) de la paire au second point de référence (P5, P8) de la paire selon des données cartographiques indiquant la topologie du réseau routier dans une zone comprenant ladite séquence de positions géographiques (P1, P2, ..., P8) ;
d) déterminer un ou plusieurs itinéraires routiers possibles entre le premier desdits points de référence (P1) et le dernier desdits points de référence (P8), en concaténant lesdits tronçons d'itinéraires routiers admissibles ; et
e) identifier l'itinéraire routier le plus probable parmi ledit un ou lesdits plusieurs itinéraires routiers possibles sur la base de valeurs d'un paramètre indiquant la probabilité que ledit véhicule (5) ait effectivement suivi un itinéraire routier possible, chaque valeur dudit paramètre étant calculée en comparant ladite séquence de positions géographiques dudit véhicule (5) à l'un desdits itinéraires routiers possibles.

2. Appareil (3) selon la revendication 1, dans lequel lesdites données indiquant ladite séquence de positions géographiques (P1, P2, ..., P8) comprennent, pour chaque position géographique, au moins l'un des éléments parmi :
- des coordonnées géographiques de ladite position géographique ;
- une date et une heure de ladite position géographique ;
- une direction et une vitesse dudit véhicule (5) à ladite position géographique ; et
- des informations indiquant la fiabilité de ladite position géographique.

3. Appareil (3) selon la revendication 2, dans lequel ledit appareil (3) est configuré, lors de l'étape de sélection dudit ensemble de points de référence (P1, P5, P8), de manière à supprimer au moins une position géographique de ladite séquence de positions géographiques (P1, P2, ..., P8), ladite au moins une position géographique étant supprimée si :
- sur la base desdites informations indiquant la fiabilité de ladite position géographique, il est déterminé que ladite position géographique n'est pas fiable ; et/ou
- sur la base desdites coordonnées géographiques de ladite position géographique, il est déterminé que ladite position géographique est redondante en ce que la distance entre ladite position géographique et le dernier point de référence sélectionné est inférieure à une distance minimale autorisée entre des points de référence consécutifs.

4. Appareil (3) selon la revendication 2 ou 3, dans lequel ledit appareil (3) est également configuré, lors de l'étape de sélection dudit ensemble de points de référence (P1, P5, P8), de manière à sélectionner une position géographique de ladite séquence de positions géographiques (P1, P2, ..., P8) en tant qu'un point de référence si :
- sur la base de ladite vitesse dudit véhicule (5) à ladite position géographique et de ladite vitesse dudit véhicule (5) au dernier point de référence sélectionné, il est déterminé que ladite position géographique correspond à un arrêt ou à un redémarrage dudit véhicule (5) ; ou
- sur la base de ladite direction dudit véhicule (5) à ladite position géographique et de ladite direction dudit véhicule (5) au dernier point de référence sélectionné, il est déterminé que ladite position géographique correspond à un virage dudit véhicule (5) ; ou
- il est déterminé que ladite position géographique présente une distance par rapport au dernier point de référence sélectionné supérieure à une distance maximale autorisée entre des points de référence consécutifs.

5. Appareil (3) selon l'une quelconque des revendications précédentes, dans lequel ledit appareil (3) est configuré, lors de l'étape de sélection dudit ensemble de points de référence (P1, P5, P8), de manière à sélectionner une position géographique de ladite séquence de positions géographiques (P1, P2, ..., P8) en tant qu'un point de référence également lorsque ladite position géographique correspond à une perte ou à une réacquisition du signal de géolocalisation par ledit dispositif embarqué (2).

6. Appareil (3) selon l'une quelconque des revendications précédentes, dans lequel lesdites données cartographiques comprennent un graphe routier représentant ladite topologie dudit réseau routier.

7. Appareil (3) selon la revendication 6, dans lequel ledit appareil (3) est également configuré, lors de l'étape de détermination dudit un ou desdits plusieurs tronçons d'itinéraires routiers admissibles, de manière à :
- pour chaque point de référence sélectionné (P1, P5, P8), identifier au moins une arête (E11, E12, E51, E52 ; E81, E82) dudit graphe routier qui se situe au moins partiellement dans une zone de recherche (A1, A5, A8) définie autour dudit point de référence (P1, P5, P8) ; et
- pour chaque paire d'arêtes (E11-E51, E12-E52, E51-E81, E52-E82) qui se situe au moins partiellement dans des zones de recherche définies autour de points de référence consécutifs, déterminer au moins un tronçon d'itinéraire routier admissible en tant qu'une concaténation d'arêtes dudit graphe routier reliant ladite paire d'arêtes (E11-E51, E12-E52, E51-E81, E52-E82).

8. Appareil (3) selon la revendication 7, dans lequel ledit appareil (3) est également configuré, lors de l'étape de détermination d'un ou plusieurs tronçons d'itinéraires routiers admissibles, pour chaque paire de points de référence consécutifs (P1-P5, P5-P8), de manière à mettre en oeuvre une étape de filtrage de quelconques tronçons d'itinéraires routiers admissibles, mais improbables, ladite étape de filtrage étant basée sur une ou plusieurs métriques calculées pour chaque tronçon d'itinéraire routier admissible entre les points de ladite paire de points de référence consécutifs (P1-P5, P5-P8), ladite une ou lesdites plusieurs métriques comprenant :
- au moins une métrique indiquant une distance ou une similitude entre une courbe qui passe par les positions géographiques comprises entre les points de ladite paire de points de référence consécutifs (P1-P5, P5-P8) et ledit tronçon d'itinéraire routier admissible entre les points de ladite paire de points de référence consécutifs (P1-P5, P5-P8) ; et/ou
- au moins une métrique indiquant la différence entre un temps de parcours nominal dudit tronçon d'itinéraire routier admissible entre les points de ladite paire de points de référence consécutifs (P1-P5, P5-P8) et un temps de parcours réel entre les points de ladite paire de points de référence consécutifs (P1-P5, P5-P8).

9. Appareil (3) selon l'une quelconque des revendications précédentes, dans lequel ledit appareil (3) est configuré, lors de l'étape de détermination dudit un ou desdits plusieurs itinéraires routiers possibles, de manière à mettre en oeuvre un processus itératif comprenant les étapes ci-dessous consistant à :
d1) déterminer toute concaténation de tronçons d'itinéraires routiers admissibles reliant le premier point de référence (P1) et le (j+1)-ième point de référence, « j » étant égal à 1 à la première itération de ladite étape d1) et augmentant de 1 à chaque itération subséquente de ladite étape d1) ;
d2) si, à la j-ième itération de l'étape d1), au moins une concaténation de tronçons d'itinéraires routiers admissibles reliant le premier point de référence et le (j+1)-ième point de référence est déterminée, mettre en oeuvre une nouvelle itération de ladite étape d1) ;
d3) si, à la j-ième itération de l'étape d1), aucune concaténation n'est déterminée :
- déterminer à nouveau des tronçons d'itinéraires routiers admissibles à partir de la paire de j-ième et (j+1)-ième points de référence consécutifs, en remontant jusqu'à un maximum de « k » paires de (j-k+1)-ième et (j-k+2)-ième points de référence consécutifs et déterminer des concaténations possibles de tronçons d'itinéraires routiers admissibles reliant le premier point de référence (P1) et le (j+1)-ième point de référence en utilisant lesdits tronçons d'itinéraires routiers admissibles nouvellement déterminés ;
- si au moins une concaténation est déterminée, mettre en oeuvre une nouvelle itération de l'étape d1) ;
- si aucune concaténation n'est déterminée, conclure qu'il y existe une interruption de l'itinéraire routier entre la paire de j-ième et (j+1)-ième points de référence consécutifs et mettre en oeuvre une nouvelle itération de l'étape d1) pour déterminer au moins une concaténation de tronçons d'itinéraires routiers admissibles reliant le (j+1)-ième point de référence et le dernier point de référence (P8).

10. Appareil (3) selon l'une quelconque des revendications précédentes, ledit appareil (3) étant configuré de manière à, lors de l'identification de l'itinéraire routier le plus probable, calculer ledit paramètre pour chaque itinéraire routier possible :
- sur la base d'une distance ou d'une similitude entre une courbe passant par ladite séquence de positions géographiques (P1, P2, ..., P8) et ledit itinéraire routier possible ; et/ou
- sur la base de la différence entre un temps de parcours nominal dudit itinéraire routier possible et un temps de parcours réel de ladite séquence de positions géographiques (P1, P2, ..., P8).

11. Procédé mis en oeuvre par un appareil permettant de déterminer l'itinéraire routier d'un véhicule (5), ledit procédé comprenant les étapes ci-dessous consistant à :
- recevoir, en provenance d'un dispositif embarqué (2) installé à bord dudit véhicule (5), des données indiquant une séquence de positions géographiques (P1, P2, ..., P8) par lesquelles ledit véhicule (5) est passé ;
- sélectionner, dans ladite séquence de positions géographiques (P1, P2, ..., P8), un ensemble de points de référence (P1, P5, P8) auxquels sont détectés des événements significatifs connexes au déplacement dudit véhicule (5), un événement significatif connexe au déplacement dudit véhicule (5) comprenant au moins un arrêt, un redémarrage et un virage dudit véhicule (5) ;
- pour chaque paire de points de référence consécutifs (P1-P5, P5-P8), déterminer un ou plusieurs tronçons d'itinéraires routiers admissibles permettant de se déplacer du premier point de référence (P1, P5) de la paire au second point de référence (P5, P8) de la paire selon des données cartographiques indiquant la topologie du réseau routier dans une zone comprenant ladite séquence de positions géographiques (P1, P2, ..., P8) ;
- déterminer un ou plusieurs itinéraires routiers possibles entre le premier desdits points de référence (P1) et le dernier desdits points de référence (P8), en concaténant lesdits tronçons d'itinéraires routiers admissibles ; et
- identifier l'itinéraire routier le plus probable parmi ledit un ou lesdits plusieurs itinéraires routiers possibles sur la base de valeurs d'un paramètre indiquant la probabilité que ledit véhicule (5) ait effectivement suivi un itinéraire routier possible, chaque valeur dudit paramètre étant calculée en comparant ladite séquence de positions géographiques dudit véhicule (5) à l'un desdits itinéraires routiers possibles.

12. Système de péage par satellite (1) comprenant l'appareil (3) selon l'une quelconque des revendications 1 à 10.

13. Programme informatique pouvant être chargé dans la mémoire d'un ordinateur et comprenant des parties de code logiciel pour mettre en oeuvre les étapes du procédé selon la revendication 11, lorsque ledit programme est exécuté par ledit ordinateur.
